# EUROPEAN PATENT APPLICATION

(11) **EP 1 492 303 A2**
(43) Date of publication of application: **29.12.2004**
(21) Application number: 04253670.6
(22) Date of filing: 18.06.2004
(51) Int. Cl.: H04L 29/06, H04M 7/00

(54) **Gateway and method**

(30) Priority: 27.06.2003 US 483217 P
(71) Applicant: Marconi Intellectual Property (Ringfence) Inc., Warrendale, Pennsylvania 15086 (US)
(72) Inventor: Newpol, Rich, Mars, PA 16046 (US); Punj, Arun, Cranberry Township, PA 16066 (US); Huber, Richard E., Harmony, PA 16037 (US); Rosen, Brian, Mars, PA 16046 (US)
(74) Representative: O'Connell, David Christopher

(57) **Abstract**

A telecommunications system. The system includes a first network. The system includes a first node having audio and video streams of the first network. The system includes a second network. The system includes a second node having audio and video streams of the second network. The system includes means for forming a call between the first node and the second node so the first node and the second node communicate their audio and video streams with each other. A method for forming a telecommunications call.

## Description

This application is related to contemporaneously filed U.S. provisional patent application serial number 60/483,137 titled "Audio Mixer and Method", by Arun Punj, Peter D. Hill and Richard E. Huber, having attorney docket number FORE-102, incorporated by reference herein.

### FIELD OF THE INVENTION

The present invention pertains to the formation of telecommunications calls between a first node having audio and video streams of a first network and a second node having audio and video streams of a second network. More specifically, the present invention pertains to the formation of telecommunication calls between a first node having audio and video streams of a first network and a second node having audio and video streams of a second network with a gateway which forms a connection between the first node of the first network and the second node of the second network.

### BACKGROUND OF THE INVENTION

The ViPr system can be deployed in ATM and IP/Ethernet LAN/WAN environments. Over ATM, ViPr uses point-to-multipoint Switched-Virtual-Channels (PMP-SVC) to carry audio/video traffic between ViPr terminals. Over IP/Ethernet, ViPr uses IP Unicast and Multicast to carry audio/video traffic between ViPr terminals. In certain ViPr deployment scenarios, there is a requirement for conferencing between ViPr terminals in heterogeneous network environments such as the ones described above. As an example, ViPr terminals in an ATM-SVC based network may need to conference with ViPr terminals in an IP/Ethernet based network and vice-versa. Similarly, there is a requirement for ViPr terminals in separate IP/Ethernet based LANs interconnected by an ATM-SVC based core to conference among each other. Another requirement is for ViPr terminals in separate IP/Ethernet based LANs using IP Multicast to conference across a Service Provider's backbone that does not allow IP Multicast. In these cases, an intermedia gateway (IMGW) is needed to bridge seamlessly between the different network environments while preserving the required QoS in each environment. ViPr Terminals in heterogeneous network environments interconnected by IMGWs would be able to conference seamlessly as if they all reside in the same LAN environment.

Hybrid ATM-SVC and IP/ETHERNET environments: Traditionally, IP traffic is carried over ATM using LANE or RFC1483. Current switches and routers that support ATM connect the ATM and IP/Ethernet worlds either by joining an ATM ELAN and routing the traffic to the IP/Ethernet network or terminating an RFC1483 connection and forwarding IP traffic to the IP/Ethernet network. In an ATM-SVC-based ViPr system, the ViPr terminals encapsulate audio/video traffic in RTP packets which are then carried in AAL-5 PDUs for transport over ATM SVCs without the use of IP/UDP headers. This practice serves to save bandwidth in an environment where the IP/UDP headers become irrelevant. However, whenever the need arises for conferencing with IP/Ethernet-based ViPr systems, direct mapping of an ATM SVC to IP/Ethernet address becomes a necessity. This functionality is not supported by currently available off-the-shelf routers and switches and requires the use of an Intermedia gateway.

Hybrid IP/ETHERNET Multicast and Unicast Environments: When deployed in IP/Ethernet environments, the ViPr system relies on IP Multicasts to carry audio/video traffic among the ViPr Terminals in a conference call as well as between ViPr Terminals and the video-servers. In ViPr deployments where multiple IP/Ethernet ViPr islands are interconnected by a Service Provider's backbone with no support for IP Multicast, there is a need to map the audio/video IP Multicast streams into multiple IP Unicast streams to cross the SP's space. These multi-Unicast streams would be converted back to IP Multicast streams once they reach the destination ViPr IP/Ethernet islands. This functionality is not supported by currently available off-the-shelf routers and switches and requires the use of an Intermedia gateway.

Designed to replace the conventional switch/router, the ViPr Intermedia Gateway (IMGW) is designed to enable seamless audio/video conferencing between ViPr Terminals in heterogeneous network environments as if they all reside in the same LAN environment.

The ViPr Intermedia Gateway (IMGW) is designed to:
a) Enable conferencing between ATM-SVC based and IP/Ethernet based ViPr Terminals by supporting the termination and direct mapping of ATM SVCs to IP/UDP sockets and vice-versa.
b) Enable the streaming of video channels (e.g. CNN) among hybrid ViPr environments.

### SUMMARY OF THE INVENTION

The present invention pertains to a method for forming a telecommunications call. The method comprises the steps of calling from a first node having audio and video streams of a first network a second node having audio and video streams. There is the step of forming a call between the first node and the second node so the first node and the second node communicate their audio and video streams with each other.

The present invention pertains to a telecommunications system. The system comprises a first network. The system comprises a first node having audio and video streams of the first network. The system comprises a second network. The system comprises a second node having audio and video streams of the second network. The system comprises means for forming a call between the first node and the second node so the first node and the second node communicate their audio and video streams with each other.

### BRIEF DESCRIPTION OF THE DRAWINGS

In the accompanying drawings, the preferred embodiment of the invention and preferred methods of practicing the invention are illustrated in which:
Figure 1 is a schematic representation of a telecommunications system of the present invention.
Figure 2 is a block diagram of an overview of an IMGW component of the present invention.
Figure 3 is a block diagram of a conference call between a first network and a second network.
Figure 4 is a block diagram showing before forwarding a message on an associated B2B call, the B2BUA substitutes a Call ID of the replaced call leg with its B2B counterpart.
Figure 5 is a schematic representation of an Ethernet across an ATM SVC (WAN).
Figure 6 is a schematic representation of an ATM corporate WAN via IMGW.
Figure 7 is a schematic representation of an ATM SP WAN via IMGW.
Figure 8 is a schematic representation of multicast/PMP across unicast/P2P WAN.
Figure 9 is a schematic representation of and IP LAN across an ATM WAN.

### DETAILED DESCRIPTION

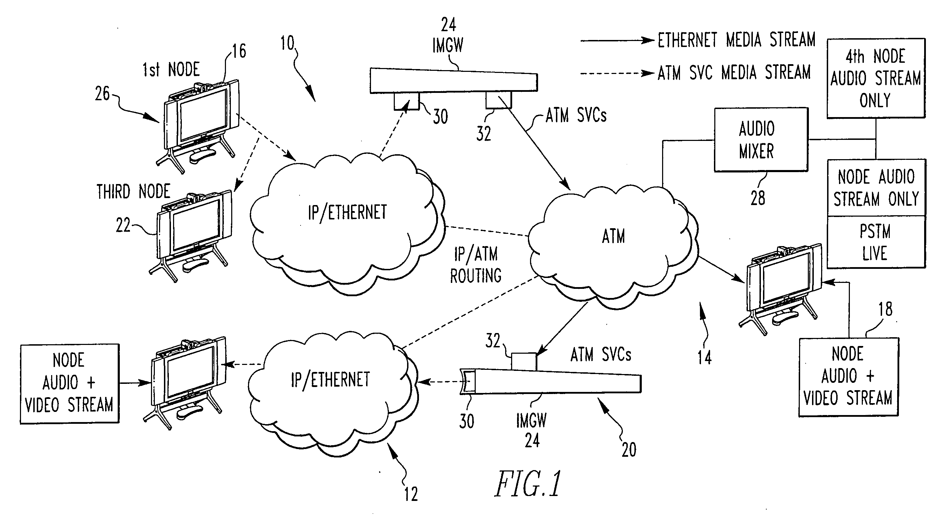

Referring now to the drawings wherein like reference numerals refer to similar or identical parts throughout the several views, and more specifically to figure 1 thereof, there is shown a telecommunications system 10. The system 10 comprises a first network 12. The system 10 comprises a first node 16 having audio and video streams of the first network 12. The system 10 comprises a second network 14 different from the first network. The system 10 comprises a second node 18 having audio and video streams of the second network 14. The system 10 comprises means for forming a call between the first node 16 and the second node 18 so the first node 16 and the second node 18 communicate their audio and video streams with each other.

Preferably, the system 10 includes a third node 22 having an audio stream and a video stream, and wherein the forming means 20 includes a gateway 24 which connects a conference between the first, second and third nodes 16, 18, 22, respectively, so the first, second and third nodes 16, 18, 22, respectively, communicate their audio and video telecommunications streams with each other. The system 10 preferably includes a host node 26 and wherein the gateway 24 communicates with the host node 26. Preferably, the gateway 24 terminates a first connection of the call between the first node 16 and the gateway 24 and creates a second connection of the call between the gateway 24 and the second node 18 in which data from the first connection is sent from the gateway 24 to the second node 18. The system 10 preferably includes an audio mixer 28 in communication with the first network 12, and a fourth node having only an audio stream, and the second node 18 communicates with the fourth node through the gateway 24 and the mixer.

Preferably, the gateway 24 includes at least a first network interface card 30 through which the gateway 24 communicates with the first network 12. The gateway 24 preferably includes a second network interface card 32 through which the gateway 24 communicates with the second network 14. Preferably, the gateway 24 includes a memory for holding the audio streams and video streams of the first node 16, the second node 18 and the third node 22.

Preferably, the first node 16 has an address, the second node 18 has an address and the third node 22 has an address, and there is a connection between the first, second and third nodes 16, 18, 22, respectively, and the memory stores the address of the first, second and third nodes 16, 18, 22, respectively. The first network 12 is preferably an Ethernet network and the second network 14 is an ATM network. Preferably, the gateway 24 is a PC. Preferably, the first node 16 and third node 22 are part of the ATM network and the first node 16, third node 22 and the gateway 24 multicast packets to each other through the ATM network.

The present invention pertains to a method for forming a telecommunications call. The method comprises the steps of calling from a first node 16 having audio and video streams of a first network 12 a second node 18 having audio and video streams of a second network. There is the step of forming a call between the first node 16 and the second node 18 so the first node 16 and the second node 18 communicate their audio and video streams with each other.

Preferably, there is the step of adding a third node 22 having an audio stream and a video stream of the first network 12 to the call to form a conference between the first, second and third nodes 16, 18, 22, respectively, so the first, second and third nodes 16, 18, 22, respectively, communicate their audio and video streams with each other. The step of adding a third node 22 preferably includes the step of communicating with a host node 26 to host the conference. Preferably, the forming step includes the step of terminating a first connection of the call between the first node 16 and a gateway 24 and creating a second connection of the call between the gateway 24 and the second node 18 in which data from the first connection is sent from the gateway 24 to the second node 18. There is preferably the step of communicating between the second node 18 and a fourth node having only an audio stream through the gateway 24 and an audio mixer 28.

A description of a system and method involving nodes having video and audio streams, otherwise known as Viprs, is found in PCT application PCT/IB03/01468 claiming priority from U.S. application 10/114,402, incorporated by reference herein.

The gateway 24 preferably is a standard PC, containing an Ethernet Network Interface Card (NIC) and an ATM NIC. There is at least one NIC, where for instance 2 different types of Ethernets are communication through the one NIC. Preferably, there are at least 2 NICs, with as many NICs as desired so communication can occur between more than two distinct networks.

The gateway 24 has a memory for the software that performs the translation and retransmission. As part of the memory is a buffer for holding the video and audio streams that are to be retransmitted. There is also stored the different address information for the different connections the gateway 24 is serving at a given time.

In the operation of the invention, source nodes having audio streaming capability and video streaming capability of a first network 12 communicate with source nodes having audio streaming capability and a video streaming capability of a second network 14 different from the first network 12. For example, for a point-to-point video call between a first node 16 having audio streaming capability and video streaming capability of an ATM network to a second node 18 having audio streaming capability and video streaming capability of an Ethernet, the first node 16 first sends an invite signal to a server of the ATM network. The invite signal has an address or name of the second node 18 in it to identify the destination of the call to the server. The server takes the invite signal it receives and applies routing rules stored in the server to route the invite signal. The invite signal follows standard SIP protocols. Through the routing rules, the server by reviewing the address in the invite signal, or after finding an address associated with the name in the invite signal, identifies that the destination is the second node 18 in the Ethernet and that in order to reach the second node 18 in the connection must pass through a gateway 24. The server sends the invite signal on towards the gateway 24 and with the address of the second node 18. The gateway 24 receives the invite signal and extracts the address of the second node 18 from the invite signal it receives from the server and creates another invitation to form a second, so called, "back-to-back" (B2B) SIP call, and sends the invite signal for the B2B call to the second node 18. Along with the invite signal sent to the second node 18 is also the address of the first node 16. The second node 18 receives the invite signal from the gateway 24 and responds with an OK signal back to the gateway 24 that also carries information about the second node 18 to facilitate the connection. In addition, the second node 18 also knows the address of the first node 16 since the first node 16 address information was part of the invite signal. The OK signal from the second node 18 is received by the gateway 24, and a corresponding OK signal for the original incoming call is formed by replacing the audio/video network addresses of the second node 18, with newly allocated gateway 24 addresses. The newly constructed OK message is then sent on to the first node 16 to indicate the connection can be formed. The INVITE carries both the originating user identification (name and host address) in the SIP header, as well as (and separate from) the media (audio and video) addresses, which are carried in a "Session Description Part" (SDP) attachment in the message. The originating user info is not changed by Gateway 24, but the media addresses in the SDP are swapped for Gateway 24 addresses when the Gateway 24 forwards the INVITE and OK messages. That way, each node thinks the Gateway 24 media addresses are actually the other node's media addresses.

The first node 16 then sends audio and video streaming packets in unicast fashion, as is well known in the art, to the gateway 24 along a first connection to the gateway 24. At the gateway 24, the first connection is terminated and the data in the packets is extracted, as is well known in the art. The gateway 24 then takes the data that has been buffered from the first connection and broadcasts packets to the second node 18, without having to change the format or mixing the data as the first node 16 and the second node 18 follow standard SIP standards and generally have the ability to handle two or three different audio and video formats, one of which is chosen by the first node 16 after it receives the OK signal from the second node 18, for instance. Audio streams and video streams from the second node 18 are sent to the first node 16 in this fashion but in reverse with the Gateway 24 acting as an intermediary, and where the second connection terminates from the second node 18 to the gateway 24 and then the data from the second node 18 is sent from the gateway 24 to the first node 16 along the first connection. As far as the first node 16 is concerned, the second node 18 appears to be part of the ATM network, as represented by the gateway 24, and as far as the second node 18 is concerned, the first node 16 is considered part of the Ethernet as represented by the gateway 24.

For a conference call, the first node 16 sends an invite signal through the server to a conference host node 26. The conference host node 26 can be the same as the first node 16 or can be a distinct node. In the invite signal to the host node 26, there is identified the other nodes that are to be formed with the conference. The host node 26 sends an invite signal through the server to the other nodes identified for the conference. The server detects (through customer-configured rules) that one of the nodes (ex. the second node 18) is part of an ATM network and routes the invitation to the gateway 24. The gateway 24 inserts its own (gateway) network addresses in the audio and video stream information in place of the parties on the Ethernet side of the call, and sends a corresponding B2B invitation to the second node 18 through the server.

The second node 18 responds to the invite signal with an OK signal back to the host node 26, inserting its own audio and video format and network addresses in the audio and video stream information. The OK signal returns via the gateway 24, which establishes audio and video connections with the third node 22, and constructs a corresponding OK message for the host, substituting the second node's 18 media addresses for newly allocated gateway 24 addresses, and replacing the original Ethernet party media addresses that were substituted for the B2B invite message. The gateway 24 then forwards the OK back to the host.

Similarly, the host node 26 sends an invite signal to the third node 22, as explained above in regard to the point to point discussion. The OK signal from the third node 22 causes the host to send additional invite messages (also called "re-invite" messages) to notify the first two nodes that a third node 22 has joined the conference, and provide the third node's 22 media addresses. This re-invite is also sent to the second node 18 via the gateway 24, as described above for the original invite message, allowing the gateway 24 to establish additional connections to provide the second party with audio and video from both the first and third nodes 16, 22, respectively.

Once the connections are formed between the nodes, the first and third nodes 16, 22, respectively, being part of the same network, send packets directly to each other and to the second node 18 through the gateway 24. The gateway 24 recognizes that the second node 18 is on a different network from the first and third nodes 16, 22, respectively, and receives media data packets from the first and third nodes 16, 22, respectively, and retransmits them on the connection formed from the gateway 24 to the second node 18.

Similarly, this works in reverse from data produced by the second node 18 for the first and third nodes 16, 22, respectively. In the ATM network, the first node 16, third node 22, and the gateway 24 multicast packets to each other based on a multicast tree that each one maintains for the conference.

The host node 26 never actually sends or receives any multicast packets. On the IP side, the packets are broadcast with only the nodes that are meant to understand them, able to do so, as is well known in the art.

When the host joins a fourth node that is part of the Ethernet, then it is joined to the conference as the second node 18 was joined to the conference. However, the gateway 24 maintains separate cross-connects for each of the second and fourth nodes so that it appears to the nodes in the ATM network that the second node 18 and the fourth node are distinct from each other and each has their own independent connection, even though the connections with the second node 18 and the fourth node pass through the gateway 24 to the nodes in the ATM network, and vice versa.

The gateway 24 can also support the presence of one or more video servers in the networks. A video server only produces video and audio streams, but does not receive video or audio streams. The video server is treated like any other node in a network by the gateway 24 and processes the packets it receives from the video server to their ultimate destinations that are on a different network to which the gateway 24 interfaces with the network in which the video server is found.

Streams produced by the video server provided to nodes in the same network as the video server are sent via ATM PMP connection, or IP multicast, depending on the type of network, to these nodes without ever being received by the gateway 24. Nodes that are to receive the streams from the video server that are on a different network are first received by the gateway 24, where the connection between the video server and the gateway 24 terminates, and in turn, the gateway 24 retransmits the streams to the ultimate destinations in the other network through separate B2B connections. Essentially, the video server is treated as any other node that has video and audio streams, except that the respective nodes and the gateway 24 will not send any video audio streams back to the video server.

In the event there is also present as part of a call, a node which only has audio streams, such as a PSTN line, then a mixer will be present through which nodes having both video and audio streams can communicate with the PSTN line. In such an instance, the gateway 24 would appear to the mixer as simply another node having audio and video streams and any packets that are provided to the mixer from the gateway 24 would be treated as any other streams from an actual node having audio and video streams where the audio stream is terminated at the mixer, buffered, and retransmitted in a reformatted fashion to the PSTN line. Any audio streams from the PSTN line that is destined for a node in another network will first be sent to the mixer where it will be reformatted and retransmitted to the gateway 24, which will then retransmit the audio stream from the PSTN line to the destination node in the other network. Again, as far as any of the nodes having audio and video streams are concerned, they are simply receiving streams from other like nodes, even though in fact the nodes are different in the sense that they may have only an audio stream and not both an audio and video stream and other distinct capabilities than the nodes having audio and video streams.

The IMGW, otherwise known as the gateway, is a device that allows media streams associated with ViPr calls to cross between domains where the domain capabilities are different. For example, the IMG might bridge between ATM SVC domains, and IP Routed domains. Although the IP Routed domain may be Ethernet or ATM-based, the primary use of this feature will be in bridging IP/Ethernet streams to ATM SVC streams. For this feature, IP Unicast (UC) streams are bridged to ATM Point-to-Point (P2P) streams, and IP Multicast (MC) streams are bridged to ATM Point-to-Multipoint (PMP) streams. A typical deployment scenario is shown in figure 1.

In the scenario above, IMGWs are used to bridge media streams between VIPr terminals located on ATM and Ethernet networks. For simplicity, the call signaling paths and ViPr Servers are not shown.

A second feature is the ability of IMGW to convert MC or PMP streams to multiple IP Unicast (MUC) or multiple ATM Point-to-Point (MP2P) streams. This feature allows media streams to be forwarded from a MC/PMP domain to a UC/P2P domain. To allow complete traversal of a UC/P2P domain, the IMGW also converts MUC/MP2P streams back to MC/PMP. This capability might be used, for example, to support traversal of an IP WAN that did not support MC to and from IP LANs that did.

In general, the IMGW bridges a call between SIP devices that belong to different media domains, which would otherwise be unable to properly exchange media data. It does this by accepting a call from one device in one domain and making a corresponding call to other devices in the other domain. The IMGW associates the two calls, and forwards the media streams from one side to the other, thereby acting as an RTP relay for the SIP devices on either side. The incoming and outgoing calls are sometimes called "Back-to-Back" (B2B) calls; therefore, the IMGW may be called a B2B User Agent (B2BUA) in this context.

The call routing is performed by the ViPr SIP Server with a set of rules for determining when to route a call through an IMGW. When the server routes a call to an IMGW, it places information in the message to allow IMGW to determine the outgoing call destination that requires a B2B call for bridging.

The IMGW is broken into the following components:
- Back-to-Back User Agent (B2BUA)
- Media Relay
- Sip Call Handler

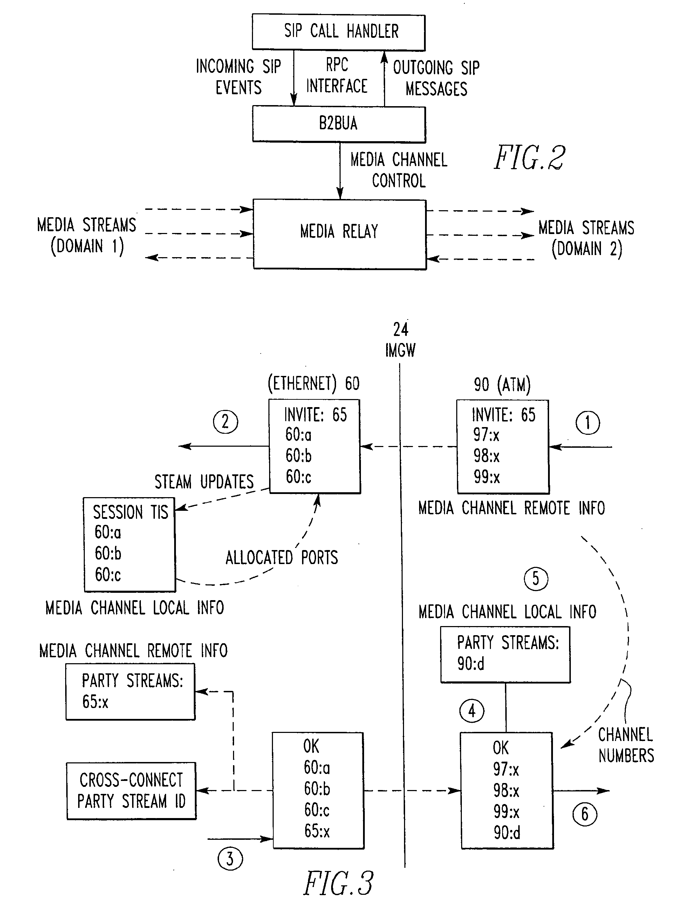

These components interact as shown in figure 2.

The Media Relay component implements the functionality for relaying media streams. The Media Relay component receives incoming media data and relays (resends) it on the associated outgoing media channel.

The B2BUA provides the call control logic to match incoming calls with outgoing (bridging) calls. For established calls, the B2BUA interfaces with Media Relay component in order to set up or tear down media channels for relaying incoming media streams.

The Sip Call Handler implements the SIP functionality and provides the B2BUA with an interface to manage SIP calls.

The main mechanism used by IMGW for external communications is via SIP messages exchanged primarily between IMGW and its associated ViPr Server. This interaction will be virtually identical to what occurs between ViPr terminals and ViPr servers, with the exception of additional routing information embedded within fields in the message. This routing information can be represented in two ways in the SIP message; via URI encoding, or an X_forward line.

X_forward line routing is one in which the ViPr Server adds an "X_forward" line to the SDP part of the INVITE message, which contains the real intended recipient. For example, assume that a user places a call to user "vipr2" at SIP server address 196.40.34.21, and the originating ViPr terminal has IP address 169.144.50.222. The initial INVITE message would be as follows:
INVITE sip: vipr2@ 196. 40. 34. 21
Via: 169. 144. 50. 222

The SIP server, upon determining that the call should be forwarded to the IMGW, would modify this message. It moves the original intended recipient information to the X_forward line, and routes the call to the IMGW:
INVITE sip: IMGW@ 169. 144. 50. 111
Via: 169. 144. 34. 21
Via: 169. 144. 50. 222
(SDP)
X_forward: vipr2@ 196. 40. 34. 21

Note that when the IMGW receives the call, it can recover the original intended recipient from the "X_forward" line in the SDP part of the message, construct a new associated outgoing call, and send the following INVITE message back to the server:
INVITE sip: vipr2@ 196. 40. 34. 21
Via: 169. 144. 50. 111

This message now represents a new and separate SIP call from the IMGW to the original intended recipient. IMGW will maintain the association between the original incoming call and this new outgoing call. The server will use routing rules (which examine the new "Via" info) and determine that this new call can be routed directly to the destination in the above example.

URI Encoded Routing is an alternate ViPr server technique, whereby, when a server routes a call through IMGW, the call's INVITE SIP header is modified before being sent to the IMGW. Assume that the original form is shown in the example below, where the originating ViPr Terminal has IP address 169.144.50.222, and the ViPr server has IP address 169.144.50.41:
INVITE sip: virp2@ 196. 40. 34. 21:1234
Via: 169. 144. 50. 222

Is rewritten into a form that directs the call to the IMGW, yet still preserves the original intended recipient. For the example above, the rewritten form is shown below, where the IMGW has IP address 169.144.50.111:
INVITE sip: vipr2..viprhost..196. 40. 34. 21..viprport..1234@169. 144. 50. 111
Via: 169. 144. 50. 41
Via: 169. 144. 50. 222

Note that when the IMGW receives the call, it can recover the original intended recipient by parsing on the "..viprhost.." and "..viprport.." keywords in the name, and construct a new associated outgoing call and send the following INVITE message back to the server:
INVITE sip: vipr2@ 196. 40. 34. 21:1234
Via: 169. 144. 50. 111

This message now represents a new and separate SIP call from the IMGW to the original intended recipient. IMGW will maintain the association between the original incoming call and this new outgoing call. The server will use routing rules (which examine the new "Via" info) and determine that this new call can be routed directly to the destination SIP server in the above example.

The following example is provided:

An existing conference call with three ATM parties (each with a single media stream) is adding a fourth (Ethernet) party via the IMGW. Therefore, the incoming INVITE message SDP has three streams with network addresses 97, 98, and 99. In this example, the IMGW has an ATM interface address of 90 and an Ethernet interface address of 60.

Figure 3 illustrates the following sequence of events (ATM NSAP handling is ignored for simplicity), with the vertical centerline representing the IMGW translation boundary between the two call legs of the B2B call:
1. The incoming INVITE message is received. B2BUA prepares a new outgoing call, copies the incoming remote stream information to the outgoing local streams, and then translates the stream addresses to IMGW Ethernet addresses.
2. B2BUA updates the TIS streams, allocating network ports (and media 'parent' channels) for new streams, and copies the port numbers back to the outgoing call local streams. Media channels are allocated for the enabled local call streams, and B2BUA sends the INVITE to the remote party.
3. The response from the remote party is received, and B2BUA saves the remote party stream ID in the cross-connect, and saves the remote party stream offerings in the call leg. The previously allocated media channels are updated with the call remote streams (from the new party).
4. B2BUA untranslates the VHost-side stream information, and translates the remote party streams. The (translated) remote party stream information is saved in the VHost-side call leg.
5. Media channels are allocated for the VHost-side, using the (translated) remote party streams as local information, and the call remote streams as remote information. The resulting allocated channel numbers are saved in the call local streams.
6. The call local streams are used to generate the reply to the original INVITE.

Subsequent call messages on either call leg update the corresponding streams represented in Party Streams or TIS streams, and initiate allocation and freeing of media channels.

The current SIP stack implementation, upon receipt of a valid OK message, generates an ACK message automatically. When received, the ACK message enables the originator of the OK message to send subsequent re-INVITE messages. In IMGW, the ACK is sent automatically when one side of a B2B call receives an OK message, before the OK message is forwarded to the other call leg. This presents a potential synchronization problem between the call legs, leading to errors if a subsequent re-INVITE is sent and forwarded before the remote party is able to send an ACK for the original OK. B2BUA implements a new ACK event, and a pair of synchronization flags to prevent this problem. Before an OK message is sent, a flag is set for the call leg to indicate that it is waiting for an ACK message. This flag blocks any subsequent re-INVITE messages from being forwarded on this call. If a re-INVITE is then received on the other call leg, the forwarding logic detects that the outgoing call leg has the ACK flag set, and defers the operation by setting a Pending flag. When the ACK is received, an ACK event handler processes the event by clearing the ACK flag and checking the Pending flag. If the Pending flag is set, the handler forwards the current call stream offerings to complete the blocked re-INVITE to the outgoing call leg.

A Call Referral message is generally sent to a connected party to direct it to send an INVITE to a third party, and drop the current call. The B2BUA simply relays a REFER message that is received on a bridged call to the associated B2B call. Any resulting INVITE messages or BYE messages resulting from this transaction are handled as usual.

An INVITE or REFER message can optionally include a "Replace" Call ID value, which is the ID of an existing call at the invited party which will be replaced by the new call. Upon accepting the new incoming call, an invited party will hang up the specified ("replaced") Call, and the ViPr user interface manages the change by substituting the call appearance of the replaced call with the appearance of the new call. If there is no call matching the specified "Replace" call in the message, then B2BUA forwards the message, copying the "Replace" header into the outgoing message. If the SIP code find an existing call which matches the "Replace" call, it retrieves the Call ID and provides it to B2BUA with the call event as the Replace Call ID.

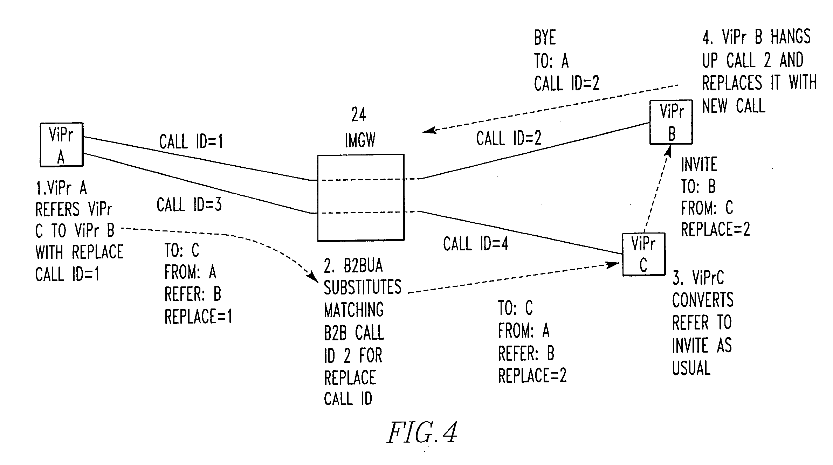

When the B2BUA receives an incoming message with a Replace Call ID, it scans the master Call Leg List to find the call. Before forwarding the message on the associated B2B call, the B2BUA substitutes the Call ID of the "replaced" Call Leg with its B2B counterpart, as illustrated in figure 4 for a REFER message.

When a client wishes to view a VideoServer channel, it sends an INVITE message of type broadcast, with its own media streams set to inactive, with valid network addressing. The VideoServer responds with an OK message, specifying its own video and audio streams being broadcast with valid multicast network addressing. After the initial connection, the VideoServer periodically sends re-INVITE messages as keepalives to insure the client is still connected.

B2BUA handles this exchange in a manner similar to a conference call; the VideoServer side of the connection is analogous to the VHost side of a conference call. The TIS streams represent the VideoServer (translated) streams, the client call leg's Remote Party streams hold copies of the client streams, and the server call leg's Remote Party streams have copies of the VideoServer streams. Each VideoServer connection belongs to a session with a GUID made up from the channel name and the VideoServer IP address. In this way, multiple clients viewing the same VideoServer channel will establish cross-connects belonging to the same session. In that way, they share the same parent media channel, thus avoiding multiple transmission of the same VideoServer output.

For a given client, the server call leg media channels are established using the Remote Party streams as the remote (VideoServer) stream info, and the call local streams as the (translated) local media info. The allocated channel numbers are stored in the call local streams. For the client side call leg, the media channels are established using the Remote Party streams of the client as the remote stream info, and the (translated) TIS streams from the VideoServer as the local media info. The allocated channel numbers are also stored in the call local streams.

The Media Relay component implements the functionality for relaying media data. The Media Relay component processes a list of active media channels, which represent incoming media streams. Each incoming media channel has a relay channel that indicates to which output media channel the data should be relayed. The main data entity of the Media Relay component is the active channel list. This list indicates which incoming media channels should be polled for incoming data. The channels themselves are equivalent to the existing ViPr Decoder channel objects. The outgoing channels are referred to only by the "Relay Channel" assignment of an active incoming channel. The outgoing channels are equivalent to the existing ViPr Encoder channel objects. The logic of the Media Relay component is broken into two main parts, the relay part and the channel management part.

The Media Relay processing loop begins by polling the set of active input channels. For each incoming media channel with data, the Relay Channel indicates the outgoing channel mapping. The received data is then resent on the outgoing media channel. IP/UDP header stripping/adding is applied as required, and performed implicitly via the IP and ATM APIs used by IMGW software. The Media Relay component uses the same mechanisms for adding and removing media channels as has been used in ViPr previously, including the use of the Relay Channel indication used in UnicastAudioMixer. The main difference is that for VideoServer connections, the media channels are only enabled in one direction; outgoing from the VideoServer.

In the network deployment topology shown in figure 1, ViPr terminals deployed across a hybrid Ethernet and ATM-SVC LAN can conference among each other. This scenario covers the following cases:
a. Conferencing between Ethernet-connected ViPr terminals and ATM-SVC-connected ViPr terminals in back-to-back LANs.

In this case, the ViPr SIP server identifies that the call invitation is destined to a ViPr terminal on another media and redirects it to the IMGW. The means of identification can be the IP address space allocated to each media (e.g. 169.144.10.0-255 for Ethernet and 169.144.11.0-255 for ATM) or different URI sub-domain names (e.g. @eth.marconi.com for Ethernet and @atm.marconi.com for ATM). Upon reception of a call invitation, the IMGW initiates a back-to-back call invitation to the destination terminal via the ViPr server. This time around, the SIP server routes the call to its final destination. Upon acceptance of the call by the destination ViPr terminal, the bearer channels get established between the IMGW and the ViPr terminals and the IMGW proceeds to bridge between the two environments. The IMGW converts the IP/UDP audio and video bearer channels to ATM-SVCs on the ATM LAN and vice-versa.

As an example, when bridging between an SVC based and an IP/Ethernet based ViPr networks, the IMGW can use the following approach to map the bearer channels between the ATM and IP/Ethernet environments:
1. The IMGW opens a UDP socket to connect to the source ViPr Terminal(s) on the Ethernet side.
2. The IMGW creates a PTP or PMP SVC to the ATM ViPr Terminal(s) and maps it to the UDP socket created in step 1.
3. Any RTP traffic received from the Ethernet ViPr terminal(s) is stripped from its IP/UDP headers and encapsulated in AAL5 PDUs for transport to the ATM ViPr Terminal(s) over the ATM SVC.
4. Any RTP traffic received from the backbone SVC is stripped from its AAL5 PDU header and encapsulated in an IP/UDP packet for transport to the Ethernet ViPr terminal(s) over the unicast/multicast socket.
b. Conferencing between Ethernet-connected ViPr terminals in two separate Ethernet LANs interconnected by an ATM-SVC core.

In this case, the ViPr SIP server identifies that the call invitation is destined to a ViPr terminal on another media and redirects it to the IMGW. The means of identification can be the IP address space allocated to each media (e.g. 169.144.10.0-255 for Ethernet and 169.144.11.0-255 for ATM) or different URI sub-domain names (e.g. @eth.marconi.com for Ethernet and @atm.marconi.com for ATM). Upon reception of a call invitation, the IMGW initiates a back-to-back call invitation to the destination terminal via the ViPr server. Again, the ViPr SIP server identifies that the call invitation is destined to a ViPr terminal on another media and redirects it to the destination IMGW who, in turn, initiates second a back-to-back call invitation to the destination terminal via the ViPr server. This time around, the SIP server routes the call to its final destination. Upon acceptance of the call by the destination ViPr terminal, the bearer channels get established between the IMGWs and the ViPr terminals and the IMGWs proceeds to bridge between the three environments. The IMGWs convert the IP/UDP audio and video bearer channels to ATM-SVCs on the ATM LAN and vice-versa.

As an example, when bridging between IP/Ethernet based ViPr networks interconnected by an ATM-SVC core, the IMGW can use the following approach to map the bearer channels between the ATM and IP/Ethernet environments:
1. The source IMGW opens a unicast or multicast UDP socket to connect to the source ViPr Terminal(s) on the Ethernet side.
2. The source IMGW creates a PTP SVC to the destination IMGW and maps it to the UDP socket created in step 1.
3. The destination IMGW opens a unicast or multicast UDP socket to connect to the destination ViPr Terminal(s) on the Ethernet side.
4. When an IMGW receives any RTP traffic from the Ethernet ViPr terminal(s), it strips it from its IP/UDP headers and encapsulates in AAL5 PDUs for transport to the destination IMGW over the ATM SVC.
5. When an IMGW receives any RTP traffic from the other IMGW over the SVC, it strips it from its AAL5 PDU header and encapsulates it in an IP/UDP packet for transport to the destination Ethernet ViPr terminal(s) over the unicast/multicast socket.

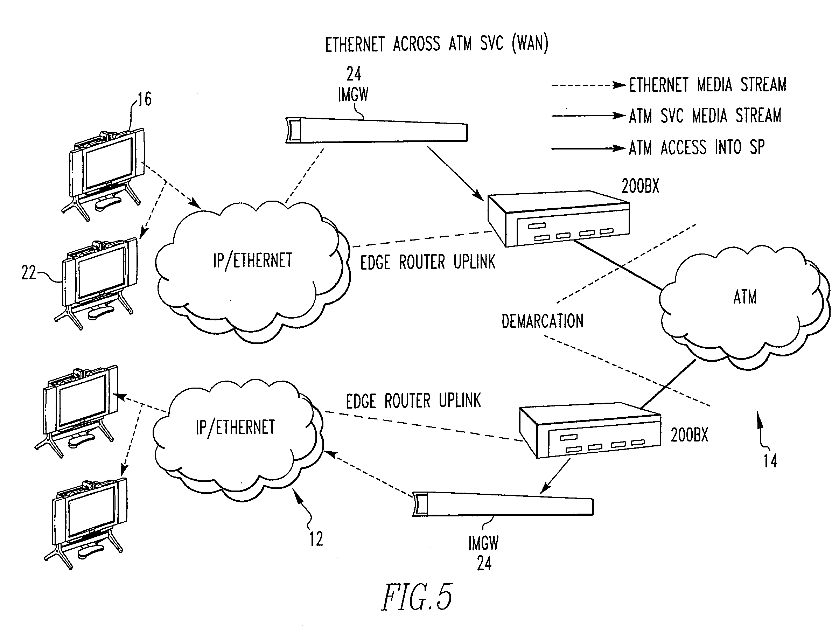

In the network deployment scenario shown in figure 5, IP/Ethernet-based ViPr islands can conference among each other over a corporate ATM backbone. From an IMGW point of view, it is similar to scenario b described above. It should be noted though that it is assumed that in this environment:
a. The ATM backbone supports SVCs or consists of an end-to-end PVP through which, SVCs can be setup.
b. The edge ATM switches belong to the same Peer Group or two separate Peer Groups that can between among each other either statically (e.g. AINI) or dynamically (e.g. PNNI).

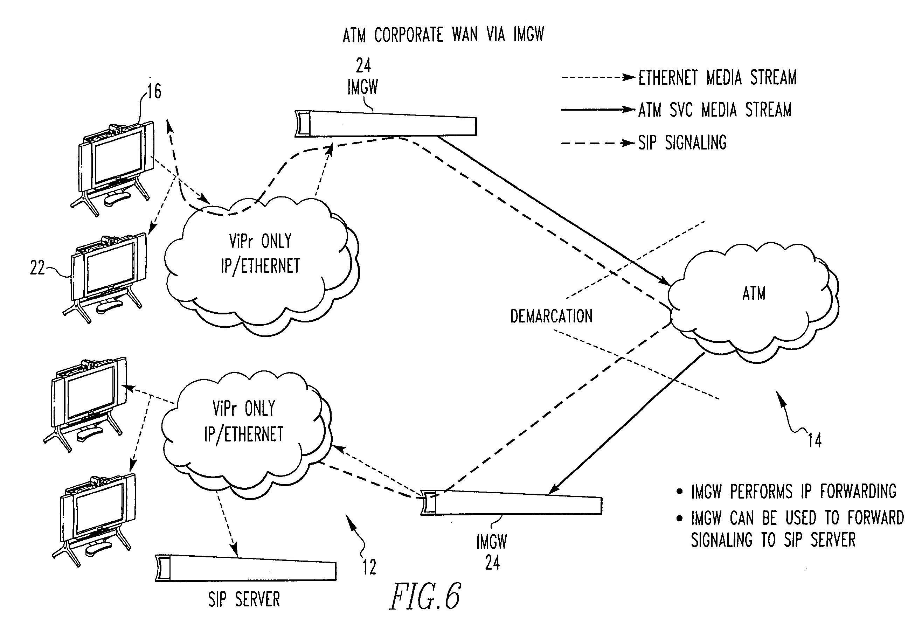

In the network deployment scenario shown in figure 6, an IP/Ethernet-based ViPr at a remote site (SOHO) can conference with the corporate HQ over a Service Provider's ATM backbone without the need for a separate IP network to transport the IP/UDP SIP signaling. The SIP server resides at headquarters. In addition to routing the media streams (i.e. audio and video streams), the IMGW also forwards the IP signaling channels to the ViPr SIP server over the same ATM link. As such, the service provider provides the remote site with one ATM circuit that connects directly to the IMGW. There is no need for an ATM switch at the remote site.

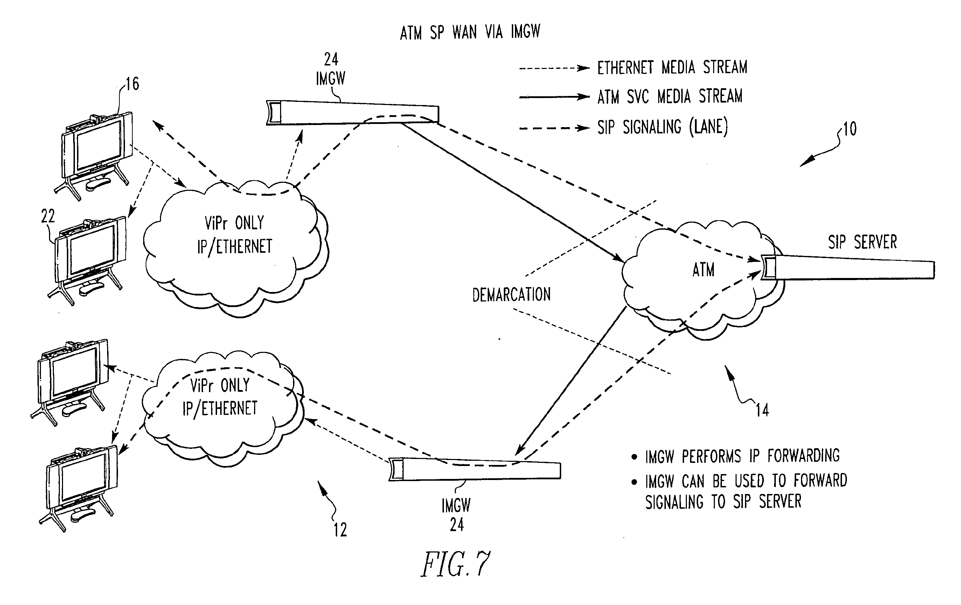

In the network deployment scenario shown in figure 7, IP/Ethernet-based ViPr terminals can conference over a Service Provider's ATM backbone without the need for a separate IP network to transport the IP/UDP SIP signaling. The SIP server resides in the service provider's space. In addition to routing the media streams (i.e. audio and video streams), the IMGW also forwards the IP signaling channels to the ViPr SIP server over the same ATM link. As such, the service provider provides the remote site with one ATM circuit that connects directly to the IMGW. There is no need for an ATM switch at the remote site.

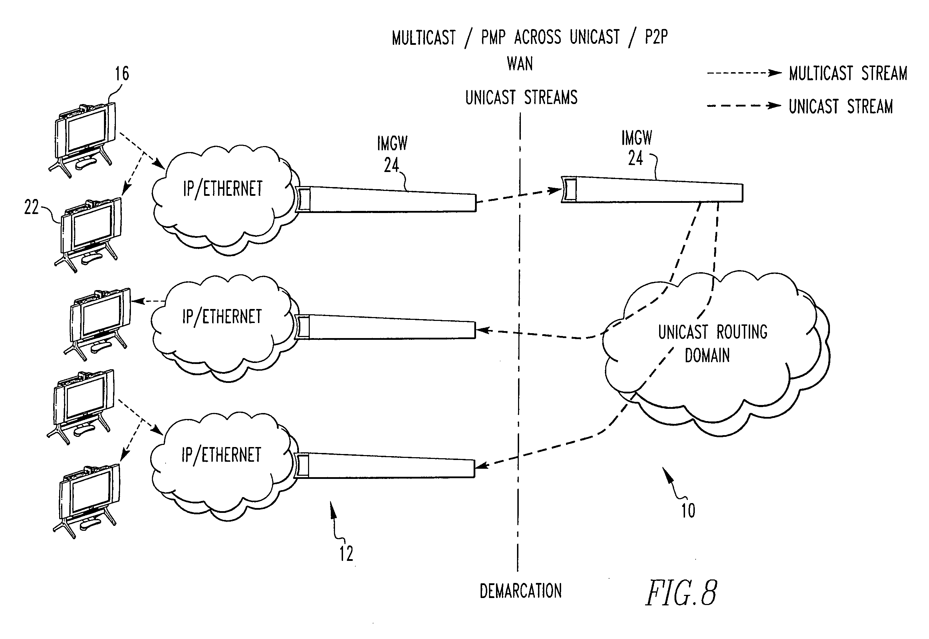

In the network deployment scenario shown in figure 8, IP/Ethernet-based ViPr islands, which support multicast, can conference among each other over a service provider's IP backbone that does not support multicast. This scenario requires the installations of IMGWs at the customer as well as the Service Provider sites to bridge between the multicast customer environment and the unicast Service Provider space. It is assumed that each IMGW is controlled by its own site's ViPr SIP server. Upon receiving a call invitation, the corporate ViPr SIP server identifies that the call is destined to a ViPr terminal in another domain across the SP backbone. The call is then redirected to the IMGW. The means of identification can be the IP address space allocated to domain (e.g. 169.144.10.0-255) or different URI sub-domain names (e.g. @pittsburgh.marconi.com and @vienna.marconi.com). Upon reception of a call invitation, the IMGW initiates a back-to-back call invitation to the destination terminal via the corporate ViPr server. Again, the corporate ViPr SIP server identifies that the call invitation is destined to a ViPr terminal in another domain across the SP backbone and redirects it to the SP IMGW who, in turn, initiates a second back-to-back call invitation to the destination terminal via the SP ViPr server.

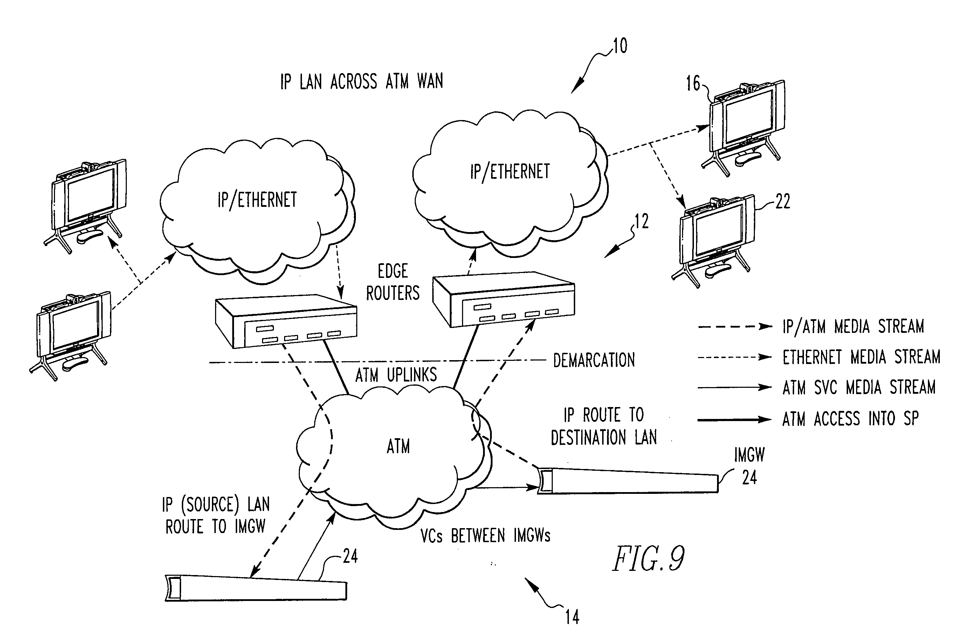

Upon receiving the call invitation, the SP ViPr SIP server identifies the destination corporate IMGW and redirects the call to it. This latter initiates the last of the back-to-back calls to the destination ViPr terminal via the local corporate ViPR server. This time around, the SIP server routes the call to its final destination. Upon acceptance of the call by the destination ViPr terminal, the bearer channels get established between the IMGWs and the ViPr terminals and the IMGWs proceeds to bridge between the three environments. The IMGWs at the source customer sites converts the IP/Ethernet multicast audio and video bearer channels to unicast streams and forward them to the SP's IMGW. This latter coverts the unicast stream into multi-unicast streams each destined to the IMGW of a participating sites. The IMGWs at the destination customer sites convert the IP/Ethernet unicast audio and video bearer channels into multicast streams and forward them to the participating ViPr terminals. Figure 9 shows an IP LAN across an ATM WAN.

ViPr uses Session Initiation Protocol (SIP) as a means of establishing, modifying and clearing multi-stream multi-media sessions. The ViPr IMGWs provides interoperability between heterogeneous networking environments. The ViPr IMGWs are software gateways running on standard computing platforms and are intended to be deployed in single or redundant configurations.

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A method for forming a telecommunications call comprising the steps of:
calling from a first node having audio and video streams of a first network a second node having audio and video streams of a second network different from the first network; and
forming a call between the first node and the second node so the first node and the second node communicate their audio and video streams with each other.

2. A method as described in Claim 1 including the step of adding a third node having an audio stream and a video stream of the first network to the call to form a conference between the first, second and third nodes so the first, second and third nodes communicate their audio and video streams with each other.

3. A method as described in Claim 2 wherein the step of adding a third node includes the step of communicating with a host node to host the conference.

4. A method as described in Claim 3 wherein the forming step includes the step of terminating a first connection of the call between the first node and a gateway and creating a second connection of the call between the gateway and the second node in which data from the first connection is sent from the gateway to the second node.

5. A method as described in Claim 4 including the step of communicating between the second node and a fourth node having only an audio stream through the gateway and an audio mixer.

6. A telecommunications system comprising:
a first network;
a first node having audio and video streams of the first network;
a second network different from the first network;
a second node having audio and video streams of the second network; and
means for forming a call between the first node and the second node so the first node and the second node communicate their audio and video streams with each other.

7. A system as described in Claim 6 including a third node having an audio stream and a video stream, and wherein the forming means includes a gateway which connects a conference between the first, second and third nodes so the first, second and third nodes communicate their audio and video telecommunications streams with each other.

8. A system as described in Claim 7 including a host node and wherein the gateway communicates with the host node.

9. A system as described in Claim 8 wherein the gateway terminates a first connection of the call between the first node and the gateway and creates a second connection of the call between the gateway and the second node in which data from the first connection is sent from the gateway to the second node.

10. A system as described in Claim 9 including an audio mixer in communication with the first network, and a fourth node having only an audio stream, and the second node communicates with the fourth node though the gateway and the mixer.

11. A system as described in Claim 10 wherein the gateway includes at least a first network interface card through which the gateway communicates with the first network.

12. A system as described in Claim 11 wherein the gateway includes a second network interface card through which the gateway communicates with the second network.

13. A system as described in Claim 12 wherein the gateway includes a memory for holding the audio streams and video streams of the first node, the second node and the third node.

14. A system as described in Claim 13 wherein the first node has an address, the second node has an address and the third node has an address, and there is a connection between the first, second and third nodes, and the memory stores the address of the first, second and third nodes.

15. A system as described in Claim 15 wherein the first network is an ATM network and the second network is an Ethernet network.

16. A system as described in Claim 15 wherein the gateway is a PC.

17. A system as described in Claim 16 wherein the first node and third node are part of the ATM network and the first node, third node and the gateway multicast packets to each other through the ATM network.
